# EUROPEAN PATENT SPECIFICATION

(11) **EP 2 663 117 B1**
(45) Date of publication and mention of the grant of the patent: **18.01.2017**
(21) Application number: 13002123.1
(22) Date of filing: 23.04.2013
(51) Int. Cl.: H04W 24/08

(54) **Method for determining the number of user equipments in a geographic area of an access network, corresponding base transceiver station, program and computer program product**
Verfahren zur Bestimmung der Anzahl von Benutzerendgeräten in einem geographischen Gebiet eines Zugangsnetzwerks, entsprechende Basissende-/ -empfangsstation, Programm und Computerprogrammprodukt
Procédé pour déterminer le nombre d'équipements utilisateurs dans une zone géographique d'un réseau d'accès, station d'émission et de réception de base, logiciel et produit logiciel correspondants

(30) Priority: 07.05.2012 DE 102012008865
(43) Date of publication of application: 13.11.2013
(73) Proprietor: Deutsche Telekom AG, 53113 Bonn (DE); T-Mobile International Austria GmbH, 1030 Wien (AT)
(72) Inventor: Lehser, Frank, D-53175 Bonn (DE); Neubacher, Andreas, A-2100 Korneuburg (AT); Klatt, Axel, 50999 Köln (DE)
(74) Representative: Schwöbel, Thilo K.

(56) References cited:
- EP-A1- 2 448 315
- GB-A- 2 392 348
- US-A1- 2011 310 844

## Description

### BACKGROUND

The present invention relates to a method for determining the number of user equipment in a geographic area of an access network of a public land mobile network.

The present invention further relates to a user equipment for use in a geographic area of an access network of a public land mobile network, and to a base transceiver station for determining the number of user equipments in a geographic area of an access network of a public land mobile network.

The procedure to track the dedicated cell of a user or of a user equipment in a public land mobile network and to notify user equipments about incoming connection requests is important for the functionality of mobile networks. The possibility to get knowledge of the dedicated cell a user or a user equipment is camping on is important, e.g., for a voice call and more generally in any case that data of other network entities, like gateways etc., are to be sent to a specific user equipment.

Generally, there are two possible schemes to track the dedicated cell of a user equipment:
(1) The user equipment does announce its presence within a certain radio cell at each radio cell change while moving between different radio cells of the public land mobile network. The public land mobile network keeps track about each and every radio cell change.
(2) The user equipment is paged (i.e. the base transceiver station of a radio cell or of a plurality of radio cells transmit a certain identification which is associated with a certain user equipment on the broadcast channel) and it is indicated to the user equipment to contact the base transceiver station (or another node of the public land mobile network), i.e. to make the public land mobile network aware about the current cell of the user equipment.

Both schemes have benefits and drawbacks depending on the mobility pattern of user equipments. While according to the first scheme, rather static (i.e. non moving) user equipments benefit from the necessity of only a rather small number of signalling occasions, i.e. a minimum of signalling requirements, (as the locations of the different user equipments are known to the public land mobile network due to the last radio cell change), this scheme has drawbacks in case that user equipments are frequently changing their locations. This is because any user equipment has to inform the public land mobile network about its current cell at each radio cell change, i.e. the first scheme causes a rather important need for signalling between the user equipments on the one hand and the public land mobile network on the other hand.

On the contrary, the second scheme has benefits in case of rather fast moving (i.e. very mobile) user equipments as only a minimum of signalling occurs in case of such fast moving user equipments since the user equipment does not have to announce its presence at each radio cell change and thus there is rather limited signalling in case the user equipment moves between different locations of the public land mobile network. However, the second scheme leads to a rather high signalling load in many radio cells in case the user equipment needs to be paged since (due to the fact that the public land mobile network is not aware about the precise location of the user equipment) paging messages need to be broadcast in many or all radio cells while the user equipment is only present in one radio cell.

In order to keep the related signalling between different nodes or components of the public land mobile network as well as between the user equipment and the nodes of the public land mobile network comparably low, the two tracking schemes are combined in 2G (second generation) public land mobile networks (such as the GERAN (GSM EDGE Radio Access Network) network), in 3G (third generation) public land mobile networks (such as the UTRAN (UMTS Terrestrial Radio Access Network) network, and in 4G (fourth generation) public land mobile networks (such as the eUTRAN (Evolved UTRAN) network).

In 2G public land mobile networks, a number of radio cells can be combined to a so called location area (LA). Within a location area, which is identified by a specific identifier on the broadcast channel, the user equipment is allowed to freely move within the location area and to camp on each radio cell (i.e. to have a radio connection to the respective base transceiver station of the radio cell) without the need to notify the public land mobile network. Just in case the user equipment changes between radio cells which are members of different location areas, the user equipment has to inform the network that, in case of a paging need, the user equipment has to be paged in the new location area. Such a combined scheme of tracking a user equipment allows - depending on the network planning - to find a trade off between, on the one hand, the signalling needs for the signalling for location update reasons between the user equipment and the public land mobile network and, on the other hand, the signalling needs on broadcast channels within radio cells for paging purposes.

Other tracking schemes to cope with user equipment mobility are implemented in eUTRAN public land mobile networks, allowing to track a user equipment on different location granularity, either on location area level, UTRAN routing area (RA), eUTRAN tracking area (TA) level or even the radio cell level (for a limited number of user equipments).

However, knowledge about whether a user equipment is within a coverage range of a certain radio cell would be beneficial, especially for counting purposes of user equipments within a specific radio cell.

In current public land mobile networks of the second, third and fourth generation (GERAN, UTRAN, eUTRAN) as well as in other radio access technologies, paging requests are
-- originated by hierarchically higher network elements or network entities, like the MSC (Mobile Switching Center), SGSN (Serving GPRS Support Node), MME (Mobility Management Entity), etc., and
-- dedicated to a single user equipment in order to make it aware about incoming calls or messages, connection requests or data to be received by that specific user equipment from the hierarchically higher network element or network entity.
Therefore, an a priori knowledge about the user equipment to be paged is needed in order to contact a specific user equipment.

The patent document EP 2 448 315 A1, 02.05.2012, discloses a method for estimating the number of mobile stations in a geographical area.

### SUMMARY

An object of the present invention is to provide a simple solution for determining the number of user equipment in a geographic area of an access network of a public land mobile network.

The invention is defined by the subject-matter of the independent claims. Particular embodiments of the invention are set out in the dependent claims.

The object of the present invention is achieved by a method for determining the number of user equipments in a geographic area of an access network of a public land mobile network, wherein the access network comprises at least one base transceiver station, wherein a plurality of user equipments in the geographic area receive control signals from the base transceiver station, wherein the method comprises the following steps:
-- in a first step, the base transceiver station detects a first group of user equipments entering the geographic area and a second group of user equipments leaving the geographic area, wherein a previous number of user equipments corresponds to the number of user equipments in the geographic area prior to or at the beginning of the first step and wherein during the first step, an identity information element is sent to the base transceiver station by each user equipment in the first group of user equipments,
-- in a second step, a current number of user equipments in the geographic area is updated based on the previous number of user equipments in the geographic area and based on both the number of the first group of user equipments as well as the number of the second group of user equipments, wherein the current number of user equipments in the geographic area is updated in the second step dependent on the identity information elements sent by the user equipments of the first group of user equipments.

The object of the present invention is also achieved by a method for determining the number of user equipments in a geographic area of an access network of a public land mobile network, wherein the access network comprises at least one base transceiver station, wherein a plurality of user equipments in the geographic area receive control signals from the base transceiver station, wherein the method comprises the following steps:
-- in a first step, the base transceiver station detects a first group of user equipments entering the geographic area and a second group of user equipments leaving the geographic area, wherein a previous number of user equipments corresponds to the number of user equipments in the geographic area prior to or at the beginning of the first step
-- in a second step, a current number of user equipments in the geographic area is updated based on the previous number of user equipments in the geographic area and based on both the number of the first group of user equipments as well as the number of the second group of user equipments.

It is thereby advantageously possible according to the present invention that, at the level of the base transceiver station, the number of user equipments that are camping on the radio cell can be determined by regularly updating the value of the current number of user equipments. It is especially advantageous that the base transceiver station, when updating value of the current number of user equipments, does not need to send any message or information to any user equipment individually (e.g. by means of indicating a user equipment specific identity information such as an IMSI number or the like) but it is possible to determine the number of user equipments in the radio cell by adjusting or updating the current number of user equipments, i.e. tracking just the newly incoming user equipments (e.g. the user equipments changing from a neighbouring cell to the concerned radio cell or the user equipments starting to camp on the public land mobile network) as well as the newly leaving user equipments (e.g. changing from the concerned radio cell to a neighbouring radio cell or the user equipments leaving the radio cell (and hence the base transceiver station) by finishing to camp on the public land mobile network). In particular, the previous number is zero, when the method starts operating for the first time, i.e. for example upon booting the base transceiver station. After the method is accomplished for the first time, each current number becomes the previous number in the next pass of the method, respectively.A further advantage according to the present invention relates to a reduction of signalling traffic compared to applying a conventional paging procedure to all user equipments within the coverage area of the base transceiver station: As conventional paging requests are originated by hierarchically higher network elements or network entities (like the MSC (Mobile Switching Center), SGSN (Serving GPRS Support Node), MME (Mobility Management Entity)), the conventional paging process involves a signalling traffic not only between the user equipment and the base transceiver station but also between the base transceiver station and these hierarchically higher network elements. This additional signalling traffic can be eliminated or at least greatly reduced according to the present invention as the knowledge about the number of user equipments - especially those user equipments in idle mode - is only needed locally at the base transceiver station.

It is further more advantageously possible to determine the number of user equipments being a part of a subgroup of the user equipments in the geographic area of an access network of the public land mobile network using at least a part of the identity information of each user equipment. For example, such subgroups consist of one specific kind of user equipment, like the subgroup of all fast moving user equipments. Knowing the number of user equipments being part of a subgroup allows adapting the method of the present invention with respect to the specific subgroup. In this way, it is advantageously possible to reduce the signal traffic.
In particular, it is possible to determine both the number of all user equipments in a geographic area of an access network of a public land mobile network and the number of each subgroup of user equipments in a geographic area of an access network of a public land mobile network by applying the method of the present invention.
A further advantage of the present invention is that the base transceiver station can determinate the number of user equipments according to the method of the present invention, even if one or more of the user equipments cannot give notice of their presence, because for example the power supply of the user equipment fails. Such a situation would typically lead to a systematic error in counting the user equipments. Taking the identify information into account the user equipments, that are not able to give notice of their presence, can be count in.

According to the present invention, it is advantageous that knowledge exists at the base transceiver station about the number of user equipments - especially user equipments in a passive mode or in idle mode of the plurality of user equipments in the radio cell, of the first group of user equipments and of the second group of user equipments - within the coverage area of the base transceiver station.

For energy saving reasons of the base transceiver station, an a priori knowledge about the number of user equipments within the coverage area of the base transceiver station is important to derive an accurate decision, e.g. whether the transceiver of the base transceiver station can be switched off for energy saving reasons. E.g. in case that there are many user equipments in a passive mode (i.e. in idle mode) within the coverage area of the base transceiver station, the base transceiver station may not be switched off since the likelihood that a certain number of user equipments will have the need for connectivity within a certain time can be high.

Furthermore, with an increasing number of machine to machine devices (such as meters, vending machines or the like), there is a high likelihood that a certain number of devices, i.e. user equipments, are rather located at fixed places and - during normal usage - do not move at all. The knowledge about which base transceiver stations within the public land mobile network provide the coverage to such user equipments (as well as a capability reporting of such user equipments such as "fixed machine to machine device") is beneficial and allows to greatly enhance the paging signalling, since such devices (user equipments) do not need to be paged in wider areas (such as the complete respective location area or tracking area) than the respective radio cell of the base transceiver station.

Additionally, for operation and maintenance reasons, especially for an end to end connectivity check, the knowledge about the availability of idle mode user equipments within the coverage area of the base transceiver station is allowing an end to end connectivity check and to identify possible otherwise non-detectable failures on the radio frequency units, especially of the base transceiver station.

Furthermore, applications such as
-- the dynamical allocation of spectrum to different radio access technologies or
-- the adaption of cell reselection parameters (e.g. in case of radio cells of different radio access technologies are colocated) or
-- direct to direct communication applications (e.g. to provide assistance to the user equipment as a direct to direct device regarding switching to a proximity discovery functionality)
also benefit from the knowledge about the number of user equipments -especially the respective number of user equipments capable of certain radio access technologies - within the radio coverage area of a base transceiver station.

According to a preferred embodiment of the present invention, the current number of user equipments in the geographic area is updated in the second step by adding, to the previous number of user equipments, the number of the first group of user equipments having entered the geographic area during the first step, and wherein the current number of user equipments in the geographic area is updated in the second step by subtracting, from the previous number of user equipments, the number of the second group of user equipments having left the geographic area during the first step.

Thereby, it is advantageously possible according to such an embodiment of the present invention to easily determine the number of user equipments in the radio cell of the base transceiver station.

According to a further preferred embodiment of the present invention, during the first step, an identity information element is sent to the base transceiver station by each user equipment in the first group of user equipments, wherein the current number of user equipments in the geographic area is updated in the second step dependent on the identity information elements sent by the user equipments of the first group of user equipments. According to such an embodiment of the present invention, the inventive method concerns a method for determining the number and/or capabilities of user equipments in a geographic area of an access network of a public land mobile network.

According to the present invention, it is advantageously possible that the identity information element provides an information about the identity of the user equipment such that a first user equipment can be distinguished or discriminated from a second user equipment. A simple method to ensure to not count a user equipment several times is to implement an method that an user equipment has to announce its existence exactly one time in a certain defined time period. So the BTS can assume that after a request for announcement the user equipment does not indicate itself several time in this time period.

However, the identity information element does not necessarily need to comprise the information about the identity of the user equipment such that the identity of the user (of that user equipment) can be derived from such an information about the identity. Thereby, it is advantageously possible according to the present invention that the level of data privacy protection of personal data of users within the public land mobile network can be enhanced - or is not reduced by the implementation of the inventive method - because the base transceiver stations of the public land mobile network are able to distinguish between different user equipments (and preferably and advantageously are also able to obtain (general) information about different user equipments, such as the respective capabilities or type of user equipment) and are therefore enabled to provide an enhanced service level but do not have access to individual and personal data or information regarding the user equipments camping on the base transceiver station. For example, it is possible and preferred according to the present invention that instead of the transmission of, e.g., the IMSI number of a user equipment, a number derived from the IMSI number (e.g. the IMSI number in an encrypted form) according to a predefined algorithm is transmitted to the base transceiver station as part of the identity information element.

According to the present invention, it is furthermore preferred that the control signals received by the user equipments from the base transceiver station are sent on a control channel, especially a broadcast control channel (BCCH) of the base transceiver station.

Thereby, it is advantageously possible to easily reach all user equipments served by the base transceiver station, even such user equipments that are in a passive mode, especially in the idle mode. Typically, user equipments are configured to save power consumption as much as possible to enhance standby times. Therefore, public land mobile networks implement the concept of discontinuous reception (DRX). This concept allows battery powered devices like mobile phones as user equipments to optimise the power consumption by implementing a so-called "sleep mode" most of the time while no communication is ongoing. Typically, "wakeup-times" are defined during which the user equipments can be reached by the broadcast control channel of the base transceiver station, i.e. the user equipments listen to the broadcast control channel perhaps not at any occasion of a "wakeup-time" but at least regularly (such as, e.g., every 30 seconds or the like).

According to the present invention, it is furthermore preferred that the identification information element comprises an indication related to the identity of the user equipment and at least one out of the following pieces of information:
-- an indication related to the current status of the user equipment,
-- an indication related to the capabilities of the user equipment,
-- an indication related to a record of previous usage of the user equipment,
wherein the indication related to the capabilities of the user equipment especially relates to an information regarding to: the possible set of radio access technologies the user equipment is able to be used, and/or the device category of the user equipment, and/or the user category assigned to the user equipment.

Thereby, it is advantageously possible according to the present invention that the base transceiver station not only receives information about the existence of the respective user equipment but also regarding the capabilities of the user equipment and regarding further pieces of information related to the user equipment such as the status and/or the capabilities and/or the record of previous usage of the user equipment. The indication related to the current status of the user equipment refers, e.g., to whether the user equipment is in idle mode. The indication related to the capabilities of the user equipment especially refers, e.g. to:
-- the possible set of radio access technologies the user equipment is able to be used (this is especially helpful in case that a base transceiver station regarding a radio access technology should be switched off (especially for energy saving reasons): It should be assured that all user equipments can nevertheless be served, at least by using another radio access technology); and/or
-- the device category of the user equipment, i.e. e.g. whether the user equipment is a machine to machine device or whether the user equipment is enabled for device to device communication (also called peer to peer communication) or whether the user equipment is used in a fixed location (fixed device); and/or
-- the user category assigned to the user equipment (or assigned to the IMSI number), i.e. whether a gold customer or a silver customer or the like is present in the radio cell. The indication related to a record of previous usage of the user equipment refers, e.g., to the typical switch off time during a day or the like.

According to the present invention, it is furthermore preferred that the base transceiver station and a further base transceiver station of a further geographic area of the access network of the public land mobile network exchange data such that:
-- regarding the first group of user equipments at least part of the identity information elements relating to these user equipments are sent to the further base transceiver station and/or
-- regarding the second group of user equipments at least part of the identity information elements relating to these user equipments are received from the further base transceiver station.

Thereby, it is advantageously possible that base transceiver stations, especially neighbouring base transceiver stations exchange information, especially comprising at least part of the identity information element of concerned user equipments for such user equipments that change between different radio cells, i.e. that change the base transceiver station.

According to the present invention, it is furthermore preferred that an identity information leave element is sent to the base transceiver station by at least part of the user equipments in the second group of user equipments.

Thereby, it is advantageously possible that a user equipment on the point to leave a radio cell (i.e. to leave the radio coverage related with a base transceiver station) indicates this to the base transceiver station, e.g. as part of the handover process.

It is furthermore preferred according to the present invention that the transmission of the identity information element in the second step to the base transceiver station occurs at most once during a predetermined counting time interval.

Thereby, it is advantageously possible according to the present invention that the base transceiver station at maximum receives one identity information element per counting time interval. The counting time interval is a predetermined time interval, e.g. 30 seconds. Thereby, it is ensured that the identity information element of a user equipment is counted by base transceiver station only once during the counting time interval; however, a user equipment tries as long as the user equipment is successful, i.e. until a setup is done, (or until a time out is reached) to access the control channel to transfer the identity information element.

Furthermore, the present invention relates to a user equipment for use in a geographic area of an access network of a public land mobile network, wherein the access network comprises at least one base transceiver station, wherein the user equipment receives control signals from the base transceiver station, wherein the user equipment is configured such that an identity information element is sent to the base transceiver station in case that the user equipment enters the geographic area.

The user equipment provides the identity information element to the base transceiver station when entering the radio cell served by the base transceiver station. It is advantageous according to the present invention that - by means of the information received from the different user equipments - the base transceiver station is able to provide a better and more focused service to the user equipment.

It is furthermore preferred according to the present invention - also with respect to the user equipment - that the user equipment is configured such that the identity information element is sent in case that the user equipment is in a passive state or in a passive mode of operation.

It is furthermore preferred according to the present invention that the user equipment is configured such that the transmission of the identity information element to the base transceiver station occurs at most once during a predetermined counting time interval.

Thereby, it is advantageously possible according to the present invention that the base transceiver station at maximum receives one identity information element per counting time interval. The counting time interval is a predetermined time interval, e.g. 30 seconds. Thereby, it is ensured that the identity information element of a user equipment is counted by base transceiver station only once during the counting time interval; however, a user equipment tries as long as the user equipment is successful, i.e. until a setup is done, (or until a time out is reached) to access the control channel to transfer the identity information element.

Additionally, the present invention relates to a base transceiver station for determining the number of user equipments in a geographic area of an access network of a public land mobile network, wherein the access network comprises the base transceiver station, wherein a plurality of user equipments in the geographic area receive control signals from the base transceiver station, wherein the base transceiver station is configured to detect a first group of user equipments entering the geographic area and a second group of user equipments leaving the geographic area, wherein a previous number of user equipments corresponds to the number of user equipments in the geographic area prior to the detection of the first and second group of user equipments and wherein an identity information element is sent to the base transceiver station by each user equipment in the first group of user equipments,, wherein the base transceiver station is further configured to update a current number of user equipments in the geographic area based on the previous number of user equipments in the geographic area and based on both the number of the first group of user equipments as well as the number of the second group of user equipments and wherein the current number of user equipments in the geographic area is updated dependent on the identity information elements sent by the user equipments of the first group of user equipments.

In addition the present invention also relates to a base transceiver station for determining the number of user equipments in a geographic area of an access network of a public land mobile network, wherein the access network comprises the base transceiver station, wherein a plurality of user equipments in the geographic area receive control signals from the base transceiver station, wherein the base transceiver station is configured to detect a first group of user equipments entering the geographic area and a second group of user equipments leaving the geographic area, wherein a previous number of user equipments corresponds to the number of user equipments in the geographic area prior to the detection of the first and second group of user equipments, wherein the base transceiver station is further configured to update a current number of user equipments in the geographic area based on the previous number of user equipments in the geographic area and based on both the number of the first group of user equipments as well as the number of the second group of user equipments.

The base transceiver station tracks the number of user equipments in the radio cell by taking into account the number of user equipments entering the radio cell during a time interval (first group of user equipments) and the number of user equipments leaving the radio cell during a time interval (second group of user equipments). The time interval especially corresponds to the first step of the method according to the present invention. The user equipments newly entering the radio cell preferably provide an identity information element sent to the base transceiver station such that the base transceiver station is able to discriminate between different user equipments. It is advantageous according to the present invention that - by means of determining the number of user equipments within the radio cell and preferably by means of additionally using the information received from the different user equipments - the base transceiver station is able to provide a better and more focused service to the user equipment.

It is furthermore preferred according to the present invention - also with respect to the base transceiver station - that the base transceiver station is configured such that the current number of user equipments in the geographic area is updated by adding, to the previous number of user equipments, the number of the first group of user equipments having entered the geographic area, and wherein the base transceiver station is further configured such that the current number of user equipments in the geographic area is updated by subtracting, from the previous number of user equipments, the number of the second group of user equipments having left the geographic area.

According to further preferred embodiments of the present invention - also with respect to the user equipment - it is preferred that the identification information element comprises an indication related to the identity of the user equipment and at least one out of the following pieces of information:
-- an indication related to the current status of the user equipment,
-- an indication related to the capabilities of the user equipment,
-- an indication related to a record of previous usage of the user equipment,
wherein the indication related to the capabilities of the user equipment especially relates to an information regarding to: the possible set of radio access technologies the user equipment is able to be used, and/or the device category of the user equipment, and/or the user category assigned to the user equipment.

Additionally, the present invention relates to a program comprising a computer readable program code which, when executed on a computer or on a user equipment or on a base transceiver station, causes the computer or the user equipment or the base transceiver station to perform the inventive method.

Still additionally, the present invention relates to computer program product for using a user equipment with a base transceiver station, the computer program product comprising a computer program stored on a storage medium, the computer program comprising program code which, when executed on a computer or on the user equipment or on the base transceiver station, causes the computer or the user equipment or the base transceiver station to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a geographic area of a public land mobile network comprising a core network and an access network as well as a plurality of user equipments.
Figure 2 schematically illustrates a communication diagram between a base transceiver station and a user equipment according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

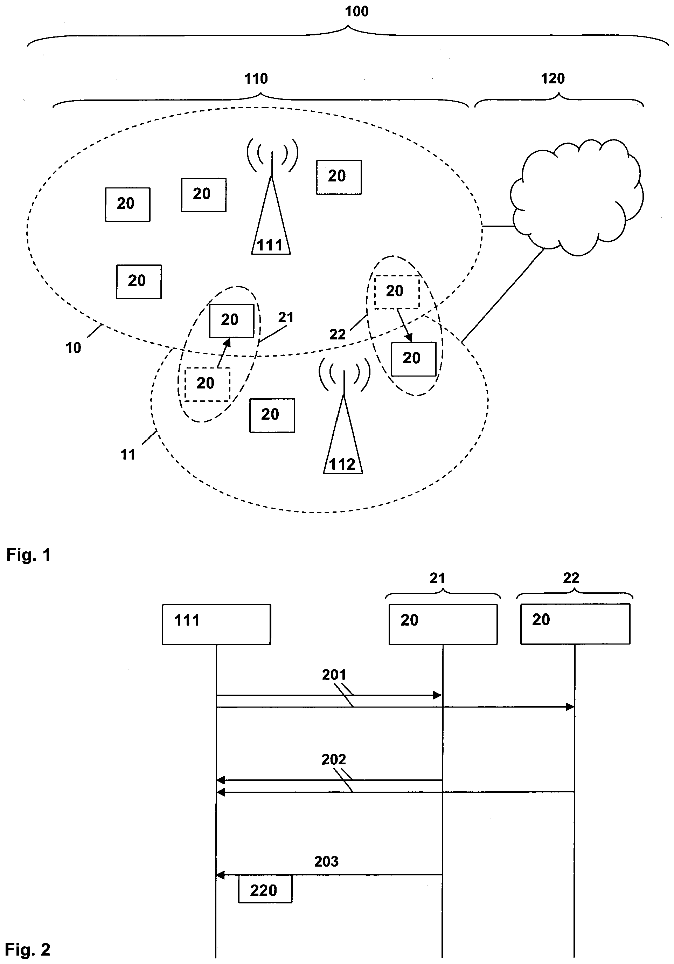

In Figure 1, a geographic area 10 (and a further geographic area 11) of a public land mobile network 100 is schematically shown, the public land mobile network 100 comprising an access network 110 and a core network 120. In the geographic area 10, a plurality of user equipment 20 are located, camping on a radio cell served by a base transceiver station 111 for the geographic area 10. The further geographic area 11 is served by a further base transceiver station 112 and comprises likewise a plurality of user equipments 20.

The core network 120 is only schematically shown by means of a cloud representation. The public land mobile network 100 (especially the core network 120) comprises typically various network elements such as an MSC (Mobile Switching Center), a SGSN (Serving GPRS Support Node), a MME (Mobility Management Entity), preferably a plurality of network element thereof. These network element are hierarchically higher network elements than the base transceiver station 111 or the further base transceiver station 112. In case that the geographic area 10 and the further geographic area 11 belong to the same location area or tracking area of the public land mobile network 100, a conventional paging event of a user equipment would be
-- initiated by the hierarchically higher network elements,
-- be paged both in geographic area 10 and in further geographic area 11, i.e. in the whole of the corresponding location area or tracking area, and
-- directed to user equipments 20 that are individually indicated by the paging request message.

According to the present invention, all these requirements of a conventional paging event does not apply in case that, in a first step, the base transceiver station 111 detects a first group 21 of user equipments 20 entering the geographic area 10 and a second group 22 of user equipments 20 leaving the geographic area 10, wherein a previous number of user equipments 20 corresponds to the number of user equipments 20 in the geographic area 10 prior to or at the beginning of the first step, and, in a second step, a current number of user equipments 20 in the geographic area 10 is updated based on the previous number of user equipments 20 in the geographic area 10 and based on both the number of the first group 21 of user equipments 20 as well as the number of the second group 22 of user equipments 20. In Figure 1, the first group 21 of user equipments 20 is represented by a single user equipment 20 leaving the further geographic area 11 (therefore this user equipment 20 is represented with a dashed line in the further geographic area 11) and entering the geographic area 10. Likewise, the second group 22 of user equipments 20 is represented by a single user equipment 20 leaving the geographic area 10 (therefore this user equipment 20 is represented with a dashed line in the geographic area 10) and entering the further geographic area 11.

Thereby, it is advantageously possible according to the present invention that the number of user equipments within the radio cell (i.e. the geographic area 10) of the base transceiver station 111 can be established without the need that such an establishment is triggered by a hierarchically higher network element. Additionally, there is no need to individually specify any user equipments by means of a specific request to the user equipment.

In Figure 2, a communication diagram between the base transceiver station 111 and a user equipment 20 belonging to the first group 21 of user equipments 20 as well as a user equipment 20 belonging to the second group 22 of user equipments 20 is schematically shown.

The premise is that the user equipment 20 of the second group 22 is camping on the radio cell (i.e. the geographic area 10) served by the base transceiver station 111, but currently leaving the geographic area 10. This means that control signals 201, 202 are sent or have previously (prior to starting the handover procedure to another radio cell) been sent from the base transceiver station 111 to the user equipment 20 of the second group 22 of user equipments 20. Furthermore, the user equipment 20 of the first group 21 is currently starting to camp on the radio cell (i.e. the geographic area 10) served by the base transceiver station 111 (i.e. this user equipment 20 is currently entering the geographic area 10). This means that control signals 201, 202 are sent from the base transceiver station 111 to the user equipment 20 of the first group 21 of user equipments 20 (i.e. the user equipment 20 of the first group 21 is obliged to hear (i.e. tune its antenna(e) and radio frequency circuitry to) the control signals 201, 202 of the base transceiver station 111.

Upon Entering of the user equipment 20 of the first group 21 of user equipments 20, this user equipment 20 sends a radio frequency signal 203 comprising an identity information element 220 to the base transceiver station 111. The identity information element 220 preferably comprises not only the information that the user equipment 20 exists but also additional information such as
-- an indication related to the current status of the user equipment 20, and/or
-- an indication related to the capabilities of the user equipment 20, and/or
-- an indication related to a record of previous usage of the user equipment 20,
wherein the indication related to the capabilities of the user equipment (20) especially relates to an information regarding to: the possible set of radio access technologies the user equipment (20) is able to be used, and/or the device category of the user equipment (20), and/or the user category assigned to the user equipment (20).

Thereby, it is possible according to the present invention that the base transceiver station 111 processes the information received by the identity information elements 220 from the plurality of user equipments 20 of the first group 21, i.e. entering the radio cell (or geographic area 10).

## Claims

1. Method for determining the number of user equipments (20) in a geographic area (10) of an access network (110) of a public land mobile network (100), wherein the access network (110) comprises at least one base transceiver station (111), wherein a plurality of user equipments (20) in the geographic area (10) receive control signals (201, 202) from the base transceiver station (111), wherein the method comprises the following steps:
-- in a first step, the base transceiver station (111) detects a first group (21) of user equipments (20) entering the geographic area (10) and a second group (22) of user equipments (20) leaving the geographic area (10), wherein a previous number of user equipments (20) corresponds to the number of user equipments (20) in the geographic area (10) prior to or at the beginning of the first step and wherein during the first step, an identity information element (220) is sent to the base transceiver station (111) by each user equipment (20) in the first group (21) of user equipments (20),
-- in a second step, a current number of user equipments (20) in the geographic area (10) is updated based on the previous number of user equipments (20) in the geographic area (10) and based on both the number of user equipments (20) in the first group (21) as well as the number of user equipments (20) in the second group (22), wherein the current number of user equipments (20) in the geographic area is updated in the second step dependent on the identity information elements (220) sent by the user equipments (20) of the first group (21) of user equipments (20), wherein the base transceiver station (111) and a further base transceiver station (112) of a further geographic area (11) of the access network (110) of the public land mobile network (100) exchange data such that:
-- regarding the first group (21) of user equipments (20) at least part of the identity information elements (220) relating to these user equipments (20) are sent to the further base transceiver station (112) and/or
-- regarding the second group (22) of user equipments (20) at least part of the identity information elements (220) relating to these user equipments (20) are received from the further base transceiver station (112).

2. Method according to claim 1, wherein the plurality of user equipments (20), the first group (21) of user equipments (20), and the second group (22) of user equipments (20) are in a passive state or in a passive mode of operation.

3. Method according to any the preceding claims, wherein the current number of user equipments (20) in the geographic area is updated in the second step by adding, to the previous number of user equipments (20), the number of user equipments (20) in the first group (21) having entered the geographic area (10) during the first step, and wherein the current number of user equipments (20) in the geographic area (10) is updated in the second step by subtracting, from the previous number of user equipments (20), the number of user equipments (20) in the second group (22) having left the geographic area (10) during the first step.

4. Method according to any the preceding claims, wherein the control signals (201, 202) received by the user equipments (20) from the base transceiver station (111) are sent on a control channel, especially a broadcast control channel of the base transceiver station (111).

5. Method according to any the preceding claims, wherein the identification information element (220) comprises an indication related to the identity of the user equipment (20) and at least one out of the following pieces of information:
-- an indication related to the current status of the user equipment (20),
-- an indication related to the capabilities of the user equipment (20),
-- an indication related to a record of previous usage of the user equipment (20),
wherein the indication related to the capabilities of the user equipment (20) especially relates to an information regarding to: the possible set of radio access technologies the user equipment (20) is able to be used, and/or the device category of the user equipment (20), and/or the user category assigned to the user equipment (20).

6. Method according to any the preceding claims, wherein an identity information leave element is sent to the base transceiver station (111) by at least part of the user equipments (20) in the second group (22) of user equipments (20).

7. Base transceiver station (111) for determining the number of user equipments (20) in a geographic area (10) of an access network (110) of a public land mobile network (100), wherein the access network (110) comprises the base transceiver station (111), wherein the base transceiver station (111) is configured such that a plurality of user equipments (20) in the geographic area (10) receive control signals (201, 202) from the base transceiver station (111), wherein the base transceiver station (111) is configured to detect a first group (21) of user equipments (20) entering the geographic area (10) and a second group (22) of user equipments (20) leaving the geographic area (10), wherein a previous number of user equipments (20) corresponds to the number of user equipments (20) in the geographic area (10) prior to the detection of the first and second group (21, 22) of user equipments (20), and wherein the base transceiver station (111) is configured such that an identity information element (220) sent by each user equipment (20) in the first group (21) of user equipments (20) is received by the base transceiver station (111), wherein the base transceiver station (111) is further configured to update a current number of user equipments (20) in the geographic area (10) based on the previous number of user equipments (20) in the geographic area (10) and based on both the number of user equipments (20) in the first group (21) as well as the number of user equipments (20) in the second group (22) and wherein the current number of user equipments (20) in the geographic area is updated dependent on the identity information elements (220) sent by the user equipments (20) of the first group (21) of user equipments (20) and received by the base transceiver station (111), wherein the base transceiver station (111) is configured such that the base transceiver station (111) and a further base transceiver station (112) of a further geographic area (11) of the access network (110) of the public land mobile network (100) exchange data such that:
-- regarding the first group (21) of user equipments (20) at least part of the identity information elements (220) relating to these user equipments (20) are sent to the further base transceiver station (112) and/or
-- regarding the second group (22) of user equipments (20) at least part of the identity information elements (220) relating to these user equipments (20) are received from the further base transceiver station (112).

8. Base transceiver station (111) according to claim 7, wherein the base transceiver station (111) is configured such that the current number of user equipments (20) in the geographic area is updated by adding, to the previous number of user equipments (20), the number of user equipments (20) in the first group (21) having entered the geographic area (10), and wherein the base transceiver station (111) is further configured such that the current number of user equipments (20) in the geographic area (10) is updated by subtracting, from the previous number of user equipments (20), the number of user equipments (20) in the second group (22) having left the geographic area (10).

9. Base transceiver station (111) according to claim 7 or 8, wherein the identification information element (220) comprises an indication related to the identity of the user equipment (20) and at least one out of the following pieces of information:
-- an indication related to the current status of the user equipment (20),
-- an indication related to the capabilities of the user equipment (20),
-- an indication related to a record of previous usage of the user equipment (20),
wherein the indication related to the capabilities of the user equipment (20) especially relates to an information regarding to: the possible set of radio access technologies the user equipment (20) is able to be used, and/or the device category of the user equipment (20), and/or the user category assigned to the user equipment (20).

10. Program comprising a computer readable program code which, when executed on a computer or on a user equipment (20) or on a base transceiver station (111), causes the computer or the user equipment (20) or the base transceiver station (111) to perform a method according one of claims 1 to 6.

11. Computer program product for using a user equipment (20) with a base transceiver station (111), the computer program product comprising a computer program stored on a storage medium, the computer program comprising program code which, when executed on a computer or on the user equipment (20) or on the base transceiver station (111), causes the computer or the user equipment (20) or the base transceiver station (111) to perform a method according one of claims 1 to 6.

## Patentansprüche

1. Verfahren zum Bestimmen der Anzahl von Benutzerausrüstungen (20) in einem geografischen Gebiet (10) eines Zugangsnetzes (110) eines öffentlichen terrestrischen Mobilfunknetzes (100), wobei das Zugangsnetz (110) mindestens eine Basis-Transceiverstation (111) umfasst,
wobei mehrere Benutzerausrüstungen (20) in dem geografischen Gebiet (10) Steuersignale (201, 202) von der Basis-Transceiverstation (111) empfangen, wobei das Verfahren die folgenden Schritte umfasst:
- in einem ersten Schritt detektiert die Basis-Transceiverstation (111) eine erste Gruppe (21) von Benutzerausrüstungen (20), die in das geografische Gebiet (10) eintreten, und eine zweite Gruppe (22) von Benutzerausrüstungen (20), die das geografische Gebiet (10) verlassen, wobei eine frühere Anzahl von Benutzerausrüstungen (20) der Anzahl von Benutzerausrüstungen (20) in dem geografischen Gebiet (10) vor dem ersten Schritt oder am Beginn des ersten Schrittes entspricht, und wobei während des ersten Schrittes durch jede Benutzerausrüstung (20) in der ersten Gruppe (21) von Benutzerausrüstungen (20) ein Identitätsinformationselement (220) an die Basis-Transceiverstation (111) gesendet wird,
- in einem zweiten Schritt wird eine momentane Anzahl von Benutzerausrüstungen (20) in dem geografischen Gebiet (10) auf der Basis der früheren Anzahl von Benutzerausrüstungen (20) in dem geografischen Gebiet (10) und auf der Basis sowohl der Anzahl von Benutzerausrüstungen (20) in der ersten Gruppe (21) als auch der Anzahl von Benutzerausrüstungen (20) in der zweiten Gruppe (22) aktualisiert, wobei die momentane Anzahl von Benutzerausrüstungen (20) in dem geografischen Gebiet in dem zweiten Schritt in Abhängigkeit von den Identitätsinformationselementen (220) aktualisiert wird, die durch die Benutzerausrüstungen (20) der ersten Gruppe (21) von Benutzerausrüstungen (20) gesendet wurden, wobei die Basis-Transceiverstation (111) und eine weitere Basis-Transceiverstation (112) eines weiteren geografischen Gebietes (11) des Zugangsnetzes (110) des öffentlichen terrestrischen Mobilfunknetzes (100) Daten austauschen, dergestalt, dass:
- in Bezug auf die erste Gruppe (21) von Benutzerausrüstungen (20) mindestens ein Teil der Identitätsinformationselemente (220), die sich auf diese Benutzerausrüstungen (20) beziehen, an die weitere Basis-Transceiverstation (112) gesendet wird, und/oder
- in Bezug auf die zweite Gruppe (22) von Benutzerausrüstungen (20) mindestens ein Teil der Identitätsinformationselemente (220), die sich auf diese Benutzerausrüstungen (20) beziehen, von der weiteren Basis-Transceiverstation (112) empfangen wird.

2. Verfahren nach Anspruch 1, wobei die mehreren Benutzerausrüstungen (20), die erste Gruppe (21) von Benutzerausrüstungen (20) und die zweite Gruppe (22) von Benutzerausrüstungen (20) in einem passiven Zustand oder in einem passiven Betriebmodus sind.

3. Verfahren nach einem der vorangehenden Ansprüche, wobei die momentane Anzahl von Benutzerausrüstungen (20) in dem geografischen Gebiet in dem zweiten Schritt durch Hinzufügen, zu der früheren Anzahl von Benutzerausrüstungen (20), der Anzahl von Benutzerausrüstungen (20) in der ersten Gruppe (21), die während des ersten Schrittes in das geografische Gebiet (10) eingetreten sind, aktualisiert wird, und wobei die momentane Anzahl von Benutzerausrüstungen (20) in dem geografischen Gebiet (10) in dem zweiten Schritt durch Subtrahieren, von der früheren Anzahl von Benutzerausrüstungen (20), der Anzahl von Benutzerausrüstungen (20) in der zweiten Gruppe (22), die das geografische Gebiet (10) während des ersten Schrittes verlassen haben, aktualisiert wird.

4. Verfahren nach einem der vorangehenden Ansprüche, wobei die Steuersignale (201, 202), die durch die Benutzerausrüstungen (20) von der Basis-Transceiverstation (111) empfangen werden, auf einem Steuerkanal gesendet werden, insbesondere einem Rundesende-Steuerkanal der Basis-Transceiverstation (111).

5. Verfahren nach einem der vorangehenden Ansprüche, wobei das Identifikationsinformationselement (220) einen Hinweis, der sich auf die Identität der Benutzerausrüstung (20) bezieht, und mindestens eine der folgenden Informationen umfasst:
- einen Hinweis in Bezug auf den aktuellen Status der Benutzerausrüstung (20),
- einen Hinweis in Bezug auf die Fähigkeiten der Benutzerausrüstung (20),
- einen Hinweis in Bezug auf einen Datensatz einer früheren Nutzung der Benutzerausrüstung (20),
wobei sich der Hinweis in Bezug auf die Fähigkeiten der Benutzerausrüstung (20) insbesondere auf eine Information bezüglich Folgendem bezieht: den möglichen Satz Funkzugangstechnologien, welche die Benutzerausrüstung (20) nutzen kann, und/oder die Gerätekategorie der Benutzerausrüstung (20), und/oder die Nutzerkategorie, die der Benutzerausrüstung (20) zugewiesen ist.

6. Verfahren nach einem der vorangehenden Ansprüche, wobei ein Identitätsinformations-Verlassen-Element durch mindestens einen Teil der Benutzerausrüstungen (20) in der zweiten Gruppe (22) von Benutzerausrüstungen (20) an die Basis-Transceiverstation (111) gesendet wird.

7. Basis-Transceiverstation (111) zum Bestimmen der Anzahl von Benutzerausrüstungen (20) in einem geografischen Gebiet (10) eines Zugangsnetzes (110) eines öffentlichen terrestrischen Mobilfunknetzes (100), wobei das Zugangsnetz (110) die Basis-Transceiverstation (111) umfasst, wobei die Basis-Transceiverstation (111) so ausgebildet ist, dass mehrere Benutzerausrüstungen (20) in dem geografischen Gebiet (10) Steuersignale (201, 202) von der Basis-Transceiverstation (111) empfangen, wobei die Basis-Transceiverstation (111) dafür ausgebildet ist, eine erste Gruppe (21) von Benutzerausrüstungen (20) zu detektieren, die in das geografische Gebiet (10) eintreten, und eine zweite Gruppe (22) von Benutzerausrüstungen (20) zu detektieren, die das geografische Gebiet (10) verlassen, wobei eine frühere Anzahl von Benutzerausrüstungen (20) der Anzahl von Benutzerausrüstungen (20) in dem geografischen Gebiet (10) vor der Detektion der ersten und der zweiten Gruppe (21, 22) von Benutzerausrüstungen (20) entspricht, und wobei die Basis-Transceiverstation (111) so ausgebildet ist, dass ein Identitätsinformationselement (220), das durch jede Benutzerausrüstung (20) in der ersten Gruppe (21) von Benutzerausrüstungen (20) gesendet wird, durch die Basis-Transceiverstation (111) empfangen wird, wobei die Basis-Transceiverstation (111) des Weiteren dafür ausgebildet ist, eine momentane Anzahl von Benutzerausrüstungen (20) in dem geografischen Gebiet (10) auf der Basis der früheren Anzahl von Benutzerausrüstungen (20) in dem geografischen Gebiet (10) und auf der Basis sowohl der Anzahl von Benutzerausrüstungen (20) in der ersten Gruppe (21) als auch der Anzahl von Benutzerausrüstungen (20) in der zweiten Gruppe (22) zu aktualisieren, und wobei die momentane Anzahl von Benutzerausrüstungen (20) in dem geografischen Gebiet in Abhängigkeit von den Identitätsinformationselementen (220), die durch die Benutzerausrüstungen (20) der ersten Gruppe (21) von Benutzerausrüstungen (20) gesendet wurden und die durch die Basis-Transceiverstation (111) empfangen wurden, aktualisiert wird, wobei die Basis-Transceiverstation (111) so ausgebildet ist, dass die Basis-Transceiverstation (111) und eine weitere Basis-Transceiverstation (112) eines weiteren geografischen Gebietes (11) des Zugangsnetzes (110) des öffentlichen terrestrischen Mobilfunknetzes (100) Daten austauschen, dergestalt, dass:
- in Bezug auf die erste Gruppe (21) von Benutzerausrüstungen (20) mindestens ein Teil der Identitätsinformationselemente (220), die sich auf diese Benutzerausrüstungen (20) beziehen, an die weitere Basis-Transceiverstation (112) gesendet wird, und/oder
- in Bezug auf die zweite Gruppe (22) von Benutzerausrüstungen (20) mindestens ein Teil der Identitätsinformationselemente (220), die sich auf diese Benutzerausrüstungen (20) beziehen, von der weiteren Basis-Transceiverstation (112) empfangen wird.

8. Basis-Transceiverstation (111) nach Anspruch 7, wobei die Basis-Transceiverstation (111) so ausgebildet ist, dass die momentane Anzahl von Benutzerausrüstungen (20) in dem geografischen Gebiet durch Hinzufügen, zu der früheren Anzahl von Benutzerausrüstungen (20), der Anzahl von Benutzerausrüstungen (20) in der ersten Gruppe (21), die in das geografische Gebiet (10) eingetreten sind, aktualisiert wird, und wobei die Basis-Transceiverstation (111) des Weiteren so ausgebildet ist, dass die momentane Anzahl von Benutzerausrüstungen (20) in dem geografischen Gebiet (10) durch Subtrahieren, von der früheren Anzahl von Benutzerausrüstungen (20), der Anzahl von Benutzerausrüstungen (20) in der zweiten Gruppe (22), die das geografische Gebiet (10) verlassen haben, aktualisiert wird.

9. Basis-Transceiverstation (111) nach Anspruch 7 oder 8, wobei das Identifikationsinformationselement (220) einen Hinweis, der sich auf die Identität der Benutzerausrüstung (20) bezieht, und mindestens eine der folgenden Informationen umfasst:
- einen Hinweis in Bezug auf den aktuellen Status der Benutzerausrüstung (20),
- einen Hinweis in Bezug auf die Fähigkeiten der Benutzerausrüstung (20),
- einen Hinweis in Bezug auf einen Datensatz einer früheren Nutzung der Benutzerausrüstung (20),
wobei sich der Hinweis in Bezug auf die Fähigkeiten der Benutzerausrüstung (20) insbesondere auf eine Information bezüglich Folgendem bezieht: den möglichen Satz Funkzugangstechnologien, welche die Benutzerausrüstung (20) nutzen kann, und/oder die Gerätekategorie der Benutzerausrüstung (20), und/oder die Nutzerkategorie, die der Benutzerausrüstung (20) zugewiesen ist.

10. Programm, das einen Computer-lesbaren Programmcode umfasst, der, wenn er auf einem Computer oder auf einer Benutzerausrüstung (20) oder auf einer Basis-Transceiverstation (111) ausgeführt wird, den Computer oder die Benutzerausrüstung (20) oder die Basis-Transceiverstation (111) veranlasst, ein Verfahren nach einem der Ansprüche 1 bis 6 auszuführen.

11. Computerprogrammprodukt für die Verwendung einer Benutzerausrüstung (20) mit einer Basis-Transceiverstation (111), wobei das Computerprogrammprodukt ein Computerprogramm umfasst, das auf einem Speichermedium gespeichert ist, wobei das Computerprogramm Programmcode umfasst, der, wenn er auf einem Computer oder auf der Benutzerausrüstung (20) oder auf der Basis-Transceiverstation (111) ausgeführt wird, den Computer oder die Benutzerausrüstung (20) oder die Basis-Transceiverstation (111) veranlasst, ein Verfahren nach einem der Ansprüche 1 bis 6 auszuführen.

## Revendications

1. Procédé pour déterminer le nombre d'équipements d'utilisateur (20) dans une zone géographique (10) d'un réseau d'accès (110) d'un réseau mobile terrestre public (100), dans lequel le réseau d'accès (110) comprend au moins une station émettrice-réceptrice de base (111),
dans lequel une pluralité d'équipements d'utilisateurs (20) dans la zone géographique (10) reçoivent des signaux de commande (201, 202) à partir de la station émettrice-réceptrice de base (111), dans lequel le procédé comprend les étapes suivantes :
- dans une première étape, la station émettrice-réceptrice de base (111) détecte un premier groupe (21) d'équipements d'utilisateurs (20) entrant dans la zone géographique (10) et un second groupe (22) d'équipements d'utilisateurs (20) quittant la zone géographique (10), dans lequel un nombre précédent d'équipements d'utilisateur (20) correspond au nombre d'équipements d'utilisateurs (20) dans la zone géographique (10) avant ou au début de la première étape, et dans lequel, lors de la première étape, un élément d'informations d'identité (220) est envoyé à la station émettrice-réceptrice de base (111) par chaque équipement d'utilisateur (20) dans le premier groupe (21) d'équipements d'utilisateurs (20),
- dans une seconde étape, un nombre actuel d'équipements utilisateurs (20) dans la zone géographique (10) est mis à jour en fonction du nombre précédent d'équipements utilisateur (20) dans la zone géographique (10) et sur la base à la fois du nombre d'équipements d'utilisateurs (20) dans le premier groupe (21) et du nombre d'équipements d'utilisateurs (20) dans le second groupe (22), dans lequel le nombre actuel d'équipements d'utilisateurs (20) dans la zone géographique est mis à jour dans la seconde étape en fonction des éléments d'informations d'identité (220) envoyés par les équipements d'utilisateurs (20) du premier groupe (21) d'équipements d'utilisateurs (20), dans lequel la station émettrice-réceptrice de base (111) et une autre station émettrice-réceptrice de base (112) d'une autre zone géographique (11) du réseau d'accès (110) du réseau mobile terrestre public (100) échangent des données de telle sorte que :
- en ce qui concerne le premier groupe (21) d'équipements d'utilisateurs (20), au moins une partie des éléments d'informations d'identité (220) relatifs à ces équipements d'utilisateurs (20) sont envoyés à l'autre station émettrice-réceptrice de base (112) et/ou
- en ce qui concerne le second groupe (22) d'équipements d'utilisateurs (20), au moins une partie des éléments d'informations d'identité (220) relatifs à ces équipements d'utilisateurs (20) sont reçus à partir de l'autre station émettrice-réceptrice de base (112).

2. Procédé selon la revendication 1, dans lequel la pluralité d'équipements d'utilisateurs (20), le premier groupe (21) d'équipements d'utilisateurs (20), et le second groupe (22) d'équipements d'utilisateurs (20) sont dans un état passif ou dans un mode de fonctionnement passif.

3. Procédé selon l'une quelconque des revendications précédentes, dans lequel le nombre actuel d'équipements d'utilisateurs (20) dans la zone géographique est mis à jour dans la seconde étape en ajoutant, au nombre précédent d'équipements d'utilisateurs (20), le nombre d'équipements d'utilisateurs (20) dans le premier groupe (21) étant entrés dans la zone géographique (10) au cours de la première étape, et dans lequel le nombre actuel d'équipements d'utilisateurs (20) dans la zone géographique (10) est mis à jour dans la seconde étape en soustrayant, du nombre précédent d'équipements d'utilisateurs (20), le nombre d'équipements d'utilisateurs (20) dans le second groupe (22) ayant quitté la zone géographique (10) au cours de la première étape.

4. Procédé selon l'une quelconque des revendications précédentes, dans lequel les signaux de commande (201, 202) reçus par les équipements d'utilisateurs (20) à partir de la station émettrice-réceptrice de base (111) sont envoyés sur un canal de commande, en particulier un canal de commande de diffusion de la station émettrice-réceptrice de base (111).

5. Procédé selon l'une quelconque des revendications précédentes, dans lequel l'élément d'informations d'identification (220) comprend une indication relative à l'identité de l'équipement d'utilisateur (20) et au moins l'un des éléments d'informations suivants :
- une indication relative à l'état actuel de l'équipement d'utilisateur (20),
- une indication relative aux capacités de l'équipement d'utilisateur (20),
- une indication relative à un enregistrement de l'utilisation précédente de l'équipement d'utilisateur (20),
- dans lequel l'indication relative aux capacités de l'équipement d'utilisateur (20) concerne en particulier une information concernant : l'ensemble possible de technologies d'accès radio que l'équipement d'utilisateur (20) est en mesure d'utiliser, et/ou la catégorie de dispositif de l'équipement d'utilisateur (20), et/ou la catégorie d'utilisateurs affectée à l'équipement d'utilisateur (20).

6. Procédé selon l'une quelconque des revendications précédentes, dans lequel un élément de sortie d'informations d'identité est envoyé à la station émettrice-réceptrice de base (111) par au moins une partie des équipements d'utilisateurs (20) dans le second groupe (22) d'équipements d'utilisateurs (20).

7. Station émettrice-réceptrice de base (111) pour déterminer le nombre d'équipements d'utilisateurs (20) dans une zone géographique (10) d'un réseau d'accès (110) d'un réseau mobile terrestre public (100), dans laquelle le réseau d'accès (110) comprend la station émettrice-réceptrice de base (111), dans laquelle la station émettrice-réceptrice de base (111) est configurée de telle sorte qu'une pluralité d'équipements d'utilisateurs (20) dans la zone géographique (10) reçoivent des signaux de commande (201, 202) à partir de la station émettrice-réceptrice de base (111), dans laquelle la station émettrice-réceptrice de base (111) est configurée pour détecter un premier groupe (21) d'équipements d'utilisateurs (20) entrant dans la zone géographique (10) et un second groupe (22) d'équipements d'utilisateurs (20) quittant la zone géographique (10), dans laquelle un nombre précédent d'équipements d'utilisateurs (20) correspond au nombre d'équipements d'utilisateurs (20) dans la zone géographique (10) avant la détection du premier et du second groupe (21, 22) d'équipements d'utilisateurs (20), et dans laquelle la station émettrice-réceptrice de base (111) est configurée de telle sorte qu'un élément d'informations d'identité (220) envoyé par chaque équipement d'utilisateur (20) dans le premier groupe (21) d'équipements d'utilisateurs (20) est reçu par la station émettrice-réceptrice de base 111), dans laquelle la station émettrice-réceptrice de base (111) est en outre configurée pour mettre à jour un nombre actuel d'équipements d'utilisateurs (20) dans la zone géographique (10) sur la base du nombre précédent d'équipements d'utilisateurs (20) dans la zone géographique (10) et sur la base à la fois du nombre d'équipements d'utilisateurs (20) dans le premier groupe (21) et du nombre d'équipements d'utilisateurs (20) dans le second groupe (22), et dans laquelle le nombre actuel d'équipements d'utilisateurs (20) dans la zone géographique est mis à jour en fonction des éléments d'informations d'identité (220) envoyés par les équipements d'utilisateurs (20) du premier groupe (21) d'équipements d'utilisateurs (20) et reçus par la station émettrice-réceptrice de base (111), dans laquelle la station émettrice-réceptrice de base (111) est configurée de telle sorte que la station émettrice-réceptrice de base (111) et une autre station émettrice-réceptrice de base (112) d'une autre zone géographique (11) du réseau d'accès (110) du réseau mobile terrestre public (100) échangent des données de telle sorte que :
- en ce qui concerne le premier groupe (21) d'équipements d'utilisateurs (20), au moins une partie des éléments d'informations d'identité (220) relatifs à ces équipements d'utilisateurs (20) sont envoyés à l'autre station émettrice-réceptrice de base (112) et/ou
- en ce qui concerne le second groupe (22) d'équipements d'utilisateurs (20), au moins une partie des éléments d'informations d'identité (220) relatifs à ces équipements d'utilisateurs (20) sont reçus à partir de l'autre station émettrice-réceptrice de base (112).

8. Station émettrice-réceptrice de base (111) selon la revendication 7, dans laquelle la station émettrice-réceptrice de base (111) est configurée de telle sorte que le nombre actuel d'équipements d'utilisateurs (20) dans la zone géographique est mis à jour en ajoutant, au nombre précédent d'équipements utilisateurs (20), le nombre d'équipements d'utilisateurs (20) dans le premier groupe (21) étant entrés dans la zone géographique (10), et dans laquelle la station émettrice-réceptrice de base (111) est en outre configurée de telle sorte que le nombre actuel d'équipements d'utilisateurs (20) dans la zone géographique (10) est mis à jour en soustrayant, du nombre précédent d'équipements d'utilisateurs (20), le nombre d'équipements d'utilisateurs (20) dans le second groupe (22) ayant quitté la zone géographique (10).

9. Station émettrice-réceptrice de base (111) selon la revendication 7 ou 8, dans laquelle l'élément d'informations d'identification (220) comprend une indication relative à l'identité de l'équipement d'utilisateur (20) et au moins l'un des éléments d'informations suivants :
- une indication relative à l'état actuel de l'équipement d'utilisateur (20),
- une indication relative aux capacités de l'équipement d'utilisateur (20),
- une indication relative à un enregistrement de l'utilisation précédente de l'équipement d'utilisateur (20),
dans laquelle l'indication relative aux capacités de l'équipement d'utilisateur (20) concerne en particulier une information concernant : l'ensemble possible de technologies d'accès radio que l'équipement d'utilisateur (20) est en mesure d'utiliser, et/ou la catégorie de dispositif de l'équipement d'utilisateur (20), et/ou la catégorie d'utilisateurs affectée à l'équipement d'utilisateur (20).

10. Programme comprenant un code de programme lisible par ordinateur qui, lorsqu'il est exécuté sur un ordinateur ou sur un équipement d'utilisateur (20) ou sur une station émettrice-réceptrice de base (111), amène l'ordinateur ou l'équipement d'utilisateur (20) ou la station émettrice-réceptrice de base (111) à mettre en oeuvre un procédé selon l'une des revendications 1 à 6.

11. Produit de programme informatique pour utiliser un équipement d'utilisateur (20) avec une station émettrice-réceptrice de base (111), le produit de programme informatique comprenant un programme informatique stocké sur un support de stockage, le programme informatique comprenant un code de programme qui, lorsqu'il est exécuté sur un ordinateur ou sur l'équipement d'utilisateur (20) ou sur la station émettrice-réceptrice de base (111), amène l'ordinateur ou l'équipement d'utilisateur (20) ou la station émettrice-réceptrice de base (111) à mettre en oeuvre un procédé selon l'une des revendications 1 à 6.
